# EUROPEAN PATENT APPLICATION

(11) **EP 1 296 480 A1**
(43) Date of publication of application: **26.03.2003**
(21) Application number: 01934365.6
(22) Date of filing: 28.05.2001
(51) Int. Cl.: H04L 12/14, H04L 12/56

(54) **INTERNET USE CHARGING SYSTEM**

(30) Priority: 14.06.2000 JP 2000179028
(71) Applicant: Wakamatsu, Hiroyuki, Tokyo 151-0062 (JP)
(72) Inventor: Wakamatsu, Hiroyuki, Tokyo 151-0062 (JP)
(74) Representative: Körfer, Thomas, Dipl.-Phys.
(86) International application number: JP0104435
(87) International publication number: WO01097450

(57) **Abstract**

An Internet usage charge billing system for passing data passing through a second provider area when data sent from a first provider area which is a sender is sent to a destination of a third provider area which is different from the second provider area through the second provider area which is different from the first provider area, the system comprising a step for storing sender identifying information given to the passing data, a step for summarizing information concerning the passing data for each the sender identifying information, and a step for determining a billed amount for each the sender identifying information in accordance with a passing information amount concerning the passing data summarized for each the sender identifying information.

## Description

### TECHNICAL FIELD

The present invention relates a Internet usage charge billing system with respect to passing data which passes through a provider area or data accessed.

### BACKGROUND TECHNIQUE

Connection to the Internet is carried out through a service provider (simply provider, hereinafter) which provides connection service to the Internet. As the provider, there exist a secondary provider, a tertiary provider and the like in addition to a primary provider to which permission is given as a first-class communication company. The secondary provider is a provider connected to any of primary providers, and the tertiary provider is a provider connected to any of secondary providers. At present, the secondary provider pays a connection charge based on a contract between the secondary provider and the primary provider which is connected to the secondary provider, and the tertiary provider pays a connection charge based on a contract between the tertiary provider and the secondary provider which is connected to the tertiary provider. Many of the primary providers are connected to each other through dedicated lines, and employ a system in which they can be connected to each other usually free or with a fixed charge. In the case of this system, each the primary provider pays own line-using charge.

However, the line-using charge is generated also when data between other primary providers which is not related to own-provider area merely passes. Although a path as connection service is controlled, using conditions between the providers are not always uniformed.

Thereupon, it is an object of the present invention to provide an Internet usage charge billing system for billing the cost caused by passing data generated especially between primary providers based on actual usage.

### DISCLOSURE OF THE INVENTION

A first mode of the present invention provides an Internet usage charge billing system for passing data passing through a second provider area when data sent from a first provider area which is a sender is sent to a destination of a third provider area which is different from the second provider area through the second provider area which is different from the first provider area, the system comprising a step for storing sender identifying information given to the passing data, a step for summarizing information concerning the passing data for each the sender identifying information, and a step for determining a billed amount for each the sender identifying information in accordance with a passing information amount concerning the passing data summarized for each the sender identifying information.

According to the Internet usage charge billing system of the first mode of the invention, it is possible to bill a usage charge to a sender provider or the like which is a user such as a mail sender or the like, for data sent from another provider to further another provider.

A second mode of the invention provides an Internet usage charge billing system for passing data passing through a second provider area when data sent from a first provider area which is a sender is sent to a destination of a third provider area which is different from the second provider area through the second provider area which is different from the first provider area, the system comprising a step for storing destination identifying information given to the passing data, a step for summarizing information concerning the passing data for each the destination identifying information, and a step for determining a billed amount for each the destination identifying information in accordance with a passing information amount concerning the passing data summarized for each the destination identifying information.

According to the second mode, it is possible to bill a usage charge to a destination provider or the like which is a data purveyor such as a content trader, for data sent from another provider to further another provider.

A third mode of the invention provides an Internet usage charge billing system for passing data in which data sent from a first provider area which is a sender is sent to a destination of a third provider area which is different from the first provider area, and data returned from the destination of the third provider area to the sender of the first provider area passes through a second provider area which is different from the first provider area, the system comprising a step for storing sender identifying information given to the passing data, a step for summarizing information concerning the passing data for each the sender identifying information, and a step for determining a billed amount for each the sender identifying information in accordance with a passing information amount concerning the passing data summarized for each the sender identifying information.

According to the third mode, it is possible to bill a usage charge to a sender provider or the like which is a user such as a mail sender or the like, for data returned to data sent from another provider to further another provider.

A fourth mode of the invention provides an Internet usage charge billing system for passing data in which data sent from a first provider area which is a sender is sent to a destination of a third provider area which is different from the first provider area, and data returned from the destination of the third provider area to the sender of the first provider area passes through a second provider area which is different from the first provider area, the system comprising a step for storing destination identifying information given to the passing data, a step for summarizing information concerning the passing data for each the destination identifying information, and a step for determining a billed amount for each the destination identifying information in accordance with a passing information amount concerning the passing data summarized for each the destination identifying information.

According to the fourth mode, it is possible to bill a usage charge to a destination provider or the like which is a data purveyor such as a content trader, for data returned to data sent from another provider to further another provider.

A fifth mode of the invention provides an Internet usage charge billing system for passing data entering a second provider area when data sent from a first provider area which is a sender is sent to a destination of the second provider area which is different from the first provider area, the system comprising a step for storing sender identifying information given to the passing data, a step for summarizing information concerning the passing data for each the sender identifying information, and a step for determining a billed amount for each the sender identifying information in accordance with a passing information amount concerning the passing data summarized for each the sender identifying information.

According to the fifth mode, it is possible to bill a usage charge to a sender provider or the like which is a user such as a mail sender or the like, for data sent from another provider to an own-provider.

A sixth mode of the invention provides an Internet usage charge billing system for passing data entering a second provider area when data sent from a first provider area which is a sender is sent to a destination of the second provider area which is different from the first provider area, the system comprising a step for storing destination identifying information given to the passing data, a step for summarizing information concerning the passing data for each the destination identifying information, and a step for determining a billed amount for each the destination identifying information in accordance with a passing information amount concerning the passing data summarized for each the destination identifying information.

According to the sixth mode, it is possible to bill a usage charge to an associated provider which is a data purveyor such as a content trader or to a data purveyor such as a content trader of an own-provider, for data sent from the other provider to the own-provider.

A seventh mode of the invention provides an Internet usage charge billing system for passing data in which data sent from a first provider area which is a sender is sent to a destination of a second provider area which is different from the first provider area, and data returned to the sender of the first provider area from the destination of the second provider area corresponds to passing data which goes out from the second provider area, the system comprising a step for storing sender identifying information given to the passing data, a step for summarizing information concerning the passing data for each the sender identifying information, and a step for determining a billed amount for each the sender identifying information in accordance with a passing information amount concerning the passing data summarized for each the sender identifying information.

According to the seventh mode, it is possible to bill a usage charge to a sender provider or the like which is a user such as a mail sender or the like, for data returned to data sent from another provider to the own-provider.

An eighth mode of the invention provides an Internet usage charge billing system for passing data in which data sent from a first provider area which is a sender is sent to a destination of a second provider area which is different from the first provider area, and data returned to the sender of the first provider area from the destination of the second provider area corresponds to passing data which goes out from the second provider area, the system comprising a step for storing destination identifying information given to the passing data, a step for summarizing information concerning the passing data for each the destination identifying information, and a step for determining a billed amount for each the destination identifying information in accordance with a passing information amount concerning the passing data summarized for each the destination identifying information.

According to the eighth mode, it is possible to bill a usage charge to a destination provider or the like which is a data purveyor such as a content trader, for data returned to data sent from another provider to the own-provider.

A ninth mode of the invention provides an Internet usage charge billing system comprising a step for storing sender identifying information given to accessed data or data which is to be supplied to a sender by accessing, a step for summarizing information concerning the data for each the sender identifying information, and a step for determining a billed amount for each the sender identifying information in accordance with an information amount concerning the data summarized for each the sender identifying information.

According to the ninth mode, it is possible to bill for data accessed to a particular provider, hardware, a site or a homepage.

A tenth mode of the invention provides an Internet usage charge billing system wherein information concerning accessed data or data which is to be supplied to a sender by accessing is summarized based on sender identifying information given to the data, it is judged whether the data is object-to-be-billed data based on kinds of the data, the summarized data concerning the object-to-be-billed data is output.

According to the tenth mode, it is possible to bill for data accessed to a particular provider, hardware, a site or a homepage.

According to an eleventh mode of the invention, in the Internet usage charge billing system of any one of the first to tenth modes, the identifying information is identifying information concerning a provider, hardware or a path controller.

According to the eleventh mode, if the identifying information is concerning the provider, it is possible to bill a usage charge in units of provider, and if the identifying information is concerning the hardware, it is possible to bill the charge in units of provider or user using hardware, and if the identifying information is concerning a path controller, it is possible to bill the charge to a provider or a user having the path controller such as a router.

According to a twelfth mode of the invention, in the Internet usage charge billing system of any one of the first to tenth modes, the identifying information is an IP address, a MAC address or a domain name.

According to the twelfth mode, it is possible to bill a charge in units of user using a particular IP address, a MAC address or a domain name.

According to a thirteenth mode of the invention, in the Internet usage charge billing system of any one of the first to tenth modes, the system further comprises a step for judging an object-to-be-billed based on the identifying information.

According to the thirteenth mode, it is possible to remove an object which is not an object-to-be-billed by a separate contract.

According to a fourteenth mode of the invention, in the Internet usage charge billing system of any one of the first to tenth modes, the data is summarized in units of packet.

According to the fourteenth mode, since the data is summarized in units of packet, it is unnecessary to summarize a large amount of data.

According to a fifteenth mode of the invention, in the Internet usage charge billing system of any one of the first to tenth modes, the data is summarized in units of connection.

According to the fifteenth mode, since the data is summarized in units of connection, it is unnecessary to summarize a large amount of data.

According to a sixteenth mode of the invention, in the Internet usage charge billing system of any one of the first to tenth modes, the data is summarized in units of passing data.

According to the sixteenth mode, since the data is summarized in units of passing data, it is unnecessary to summarize a large amount of data.

According to a seventeenth mode of the invention, in the Internet usage charge billing system of any one of the first to tenth modes, the data is summarized in accordance with a data length or packet length.

According to the seventeenth mode, since the data is summarized in units of data, it is possible to bill a charge in accordance with s sending volume.

According to an eighteenth mode of the invention, in the Internet usage charge billing system of any one of the first, second, fifth and sixth modes, the passing data is read-requesting message data or write-requesting message data.

According to the eighteenth mode, it is possible to bill a charge in accordance with the number of usage of connection.

According to a nineteenth mode of the invention, in the Internet usage charge billing system of any one of the third, fourth, seventh and eighth modes, the passing data is massage data for informing a reception state, or response confirmation data for reading request or writing request.

According to the nineteenth mode, it is possible to bill a charge in accordance with the number of sending operations or the number of usage of connection.

According to a twentieth mode of the invention, in the Internet usage charge billing system of any one of the first, second, fifth and sixth modes, the passing data is connection-requesting message data or disconnection-requesting message data.

According to the twentieth mode, it is possible to bill a charge in accordance with the number of usage of connection.

According to a twenty-first mode of the invention, in the Internet usage charge billing system of any one of the first, second, fifth and sixth modes, the passing data is upload data.

According to the twenty-first mode, it is possible to bill a charge in accordance with an actual usage state.

According to a twenty-second mode of the invention, in the Internet usage charge billing system of any one of the third, fourth, seventh and eighth modes, the passing data is download data.

According to the twenty-second mode, it is possible to bill a charge in accordance with an actual usage state.

A twenty-third mode of the invention provides an Internet usage charge billing system for passing data passing through a second provider area when data sent from a first provider area which is a sender is sent to a destination of a third provider area which is different from the second provider area through the second provider area which is different from the first provider area, wherein information concerning the passing data is summarized based on sender identifying information given to the passing data, it is judged whether an object is object-to-be-billed based on the sender identifying information, and the passing data summarized concerning the object-to-be-billed is output.

According to the twenty-third mode, it is possible to bill a usage charge to a sender provider or the like which is a user such as a mail sender or the like, for data sent from another provider to further another provider.

A twenty-fourth mode of the invention provides an Internet usage charge billing system for passing data passing through a second provider area when data sent from a first provider area which is a sender is sent to a destination of a third provider area which is different from the second provider area through the second provider area which is different from the first provider area, wherein information concerning the passing data is summarized based on destination identifying information given to the passing data, it is judged whether an object is object-to-be-billed based on the destination identifying information, and the passing data summarized concerning the object-to-be-billed is output.

According to the twenty-fourth mode, it is possible to bill a usage charge to a destination provider or the like which is a data purveyor such as a content trader, for data sent from another provider to further another provider.

A twenty-fifth mode of the invention provides an Internet usage charge billing system for passing data in which data sent from a first provider area which is a sender is sent to a destination of a third provider area which is different from the first provider area, and data returned from the destination of the third provider area to the sender of the first provider area passes through a second provider area which is different from the first provider area, wherein information concerning the passing data is summarized based on sender identifying information given to the passing data, it is judged whether an object is object-to-be-billed based on the sender identifying information, and the passing data summarized concerning the object-to-be-billed is output.

According to the twenty-fifth mode of the invention, it is possible to bill a usage charge to a sender provider or the like which is a user such as a mail sender or the like, for data returned to data sent from another provider to further another provider.

A twenty-sixth mode of the invention provides an Internet usage charge billing system for passing data in which data sent from a first provider area which is a sender is sent to a destination of a third provider area which is different from the first provider area, and data returned from the destination of the third provider area to the sender of the first provider area passes through a second provider area which is different from the first provider area, wherein information concerning the passing data is summarized based on destination identifying information given to the passing data, it is judged whether an object is object-to-be-billed based on the destination identifying information, and the passing data summarized concerning the object-to-be-billed is output.

According to the twenty-sixth mode, it is possible to bill a usage charge to a destination provider or the like which is a data purveyor such as a content trader, for data returned to data sent from another provider to further another provider.

A twenty-seventh mode of the invention provides an Internet usage charge billing system for passing data entering a second provider area when data sent from a first provider area which is a sender is sent to a destination of the second provider area which is different from the first provider area, wherein information concerning the passing data is summarized based on sender identifying information given to the passing data, it is judged whether an object is object-to-be-billed based on the sender identifying information, and the passing data summarized concerning the object-to-be-billed is output.

According to the twenty-seventh mode, it is possible to bill a usage charge to a sender provider or the like which is a user such as a mail sender or the like, for data sent from another provider to an own-provider.

A twenty-eighth mode of the invention provides an Internet usage charge billing system for passing data entering a second provider area when data sent from a first provider area which is a sender is sent to a destination of the second provider area which is different from the first provider area, wherein information concerning the passing data is summarized based on destination identifying information given to the passing data, it is judged whether an object is object-to-be-billed based on the destination identifying information, and the passing data summarized concerning the object-to-be-billed is output.

According to the twenty-eighth mode, it is possible to bill a usage charge to an associated provider which is a data purveyor such as a content trader or to a data purveyor such as a content trader of an own-provider, for data sent from the other provider to the own-provider.

A twenty-ninth mode of the invention provides an Internet usage charge billing system for passing data in which data sent from a first provider area which is a sender is sent to a destination of a second provider area which is different from the first provider area, and data returned to the sender of the first provider area from the destination of the second provider area corresponds to passing data which goes out from the second provider area, wherein information concerning the passing data is summarized based on sender identifying information given to the passing data, it is judged whether an object is object-to-be-billed based on the sender identifying information, and the passing data summarized concerning the object-to-be-billed is output.

According to the twenty-ninth mode, it is possible to bill a usage charge to a sender provider or the like which is a user such as a mail sender or the like, for data returned to data sent from another provider to the own-provider.

A thirtieth mode of the invention provides an Internet usage charge billing system for passing data in which data sent from a first provider area which is a sender is sent to a destination of a second provider area which is different from the first provider area, and data returned to the sender of the first provider area from the destination of the second provider area corresponds to passing data which goes out from the second provider area, wherein information concerning the passing data is summarized based on destination identifying information given to the passing data, it is judged whether an object is object-to-be-billed based on the destination identifying information, and the passing data summarized concerning the object-to-be-billed is output.

According to the thirtieth mode, it is possible to bill a usage charge to a destination provider or the like which is a data purveyor such as a content trader, for data returned to data sent from another provider to the own-provider.

### BRIEF DESCRIPTION OF THE DRAWINGS

Fig.1 is a block diagram showing one example of a network state for explaining an Internet usage charge billing system of an embodiment.
Fig.2 is a block diagram of a system of a provider for explaining the Internet usage charge billing system of the embodiment.
Fig.3 is a block diagram showing a billing server using function realizing means of the embodiment.
Fig.4 is a diagram of data processing flow showing one embodiment of sending and receiving operation of data.
Fig.5 is a diagram of data processing flow showing one embodiment of sending and receiving operation of data.
Fig.6 is a diagram of data processing flow showing one embodiment of sending and receiving operation of data.

### BEST MODE FOR CARRYING OUT THE INVENTION

An Internet usage charge billing system according to an embodiment of the present invention will be explained below.

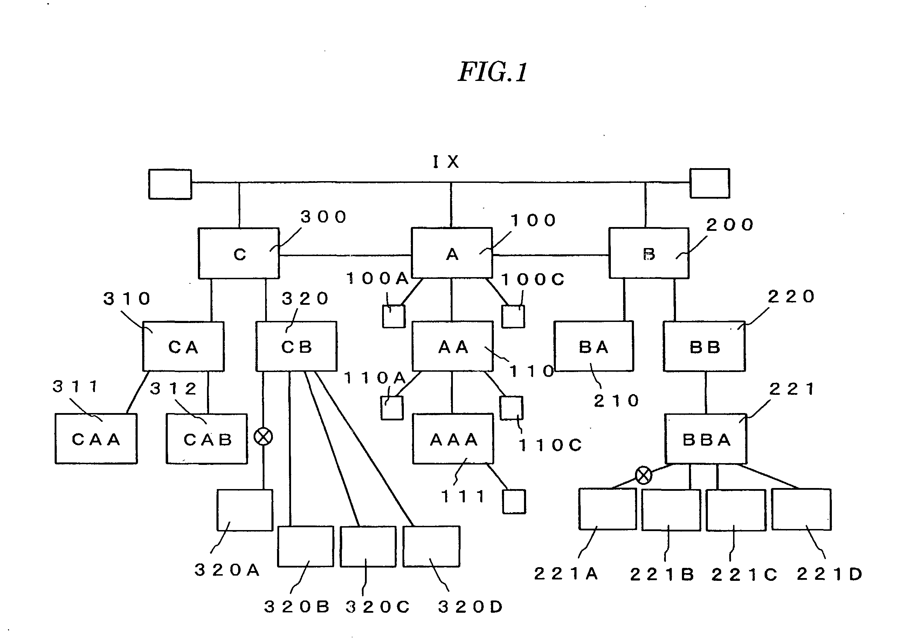

Fig.1 is a block diagram showing one example of a network state for explaining an Internet usage charge billing system of the embodiment.

In Fig.1, primary providers 100, 200 and 300 are providers to which permissions are given as first-class communication companies, and are directly connected to a Japanese Internet exchange. The primary providers 100, 200 and 300 are also connected to each other through dedicated lines. Identifying information for identifying the primary provider 100 is defined as A, identifying information for identifying the primary provider 200 is defined as B, and identifying information for identifying the primary provider 300 is defined as C.

A secondary provider 110 (identifying information AA) connected to the primary provider 100 through a dedicated line, and a tertiary provider 111 (identifying information AAA) connected to the secondary provider 110 through a dedicated line exist in the primary provider 100.

Similarly, a secondary provider 210 (identifying information BA) and a secondary provider 220 (identifying information BB) are connected to the primary provider 200. A tertiary provider 221 (identifying information BBA) is connected to the secondary provider 220. A personal user 221A, a corporate user 221B, a content trader 221C and an advertising agency 221D are connected to the tertiary provider 221.

On the other hand, a secondary provider 310 (identifying information CA) and a secondary provider 320 (identifying information CB) are connected to the primary provider 300. A tertiary provider 311 (identifying information CAA) and a tertiary provider 312 (identifying information CAB) are connected to the secondary provider 310. A personal user 320A, a corporate user 320B, a content trader 320C and an advertising agency 320D are connected to the secondary provider 320.

The personal users, the corporate users, the content traders and the advertising agencies are connected to respective contract providers. For example, a personal user 100A and a content trader 100C are connected to the primary provider 100, and a personal user 110A and a content trader 110C are connected to the secondary provider 110.

In this embodiment, one provider area includes the secondary provider 110 and the tertiary provider 111 which are connected to the primary provider 100, and the personal users 100A and 110A, and the content traders 100C and 100C which are respectively connected to the primary provider 100, the secondary provider 110 and the tertiary provider 111.

Therefore, another provider area includes the secondary providers 210 and 220, and the tertiary provider 221 which are connected to the primary provider 200, and the personal user 221A, the corporate user 221B, the content trader 221C and the advertising agency 221D respectively connected to the primary provider 200, the secondary providers 210 and 220, and the tertiary provider 221. Another provider area includes the secondary providers 310 and 320 and the tertiary providers 311 and 312 which are connected to the primary provider 300, and the personal user 320A, the corporate user 320B, the content trader 320C and the advertising agency 320D which are respectively connected to the primary provider 300, the secondary providers 310 and 320 and the tertiary providers 311 and 312.

The identifying information A, AA, AAA, B, BA, BB, BBA........ in the drawing mean identifying information concerning an IP address, a MAC address, a domain name and the like, a provider, hardware or a path controller. To personal users who are under contract to respective providers, universal addresses allocated to contracted providers are given when a line is connected. Therefore, for convenience in explaining, explanation is given using identifying information of respective providers.

First, an Internet usage charge billing system with respect to passing data which passes through the second provider 100 area when the data sent from the first provider 200 area which is a sender is sent to a destination of the third provider 300 area through the second provider 100 area will be explained.

The above case corresponds to a case in which the personal user 221A reads or inspects contents supplied from the content trader 320C for example.

In this case, data sent from the personal user 221A is sent to the content trader 320C connected to the secondary provider 320 through the tertiary provider 221, the secondary provider 220, the primary provider 200, the primary provider 100, the primary provider 300 and the secondary provider 320.

If the data is sent through the above-described path, since the data passes through the own-area, the primary provider 100 recognizes the identifying information BBA from the sent data, and bills the tertiary provider 221 (sender) of the personal user 221A (user).

If information supplied from the content trader 320C is accessed as in this embodiment, it is preferable to recognize the identifying information CB from the sent data and to bill the usage charge to the secondary provider 320 of the content trader 320C.

Next, an Internet usage charge billing system with respect to passing data will be explained. This Internet usage charge billing system is based on a condition that the data sent from the first provider 200 area (sender) is sent to a destination of the third provider 300 area, and the data returned from the destination of the third provider 300 area to the sender of the first provider 200 area passes through the second provider 100 area.

The data returned from the content trader 320C is returned to the personal user 221A through the secondary provider 320, the primary provider 300, the primary provider 100, the primary provider 200, the secondary provider 220 and the tertiary provider 221.

When the data is sent through the above-described path, since the data passes through the own-area, the primary provider 100 recognizes the identifying information BBA from the sent data, and bills the usage charge to the tertiary provider 221 (sender) of the personal user 221A (user).

If information supplied from the content trader 320C is accessed as in this embodiment, it is preferable to recognize the identifying information CB from the sent data and to bill the usage charge to the secondary provider 320 of the content trader 320C.

Although the usage charge was billed to the provider which was directly connected to the sender in the above embodiment, it is also possible to bill the usage charge to the secondary provider 220 to which the tertiary provider is connected, or to the primary provider 200 to which the tertiary provider 221 is connected, instead of the tertiary provider 221.

Although the usage charge was billed to the provider which was directly connected to the destination in the above embodiment, it is also possible to bill the usage charge to the primary provider 300 to which the secondary provider is connected, instead of the secondary provider 320.

In this manner, it is also possible to bill the usage charge to the higher provider, and the higher provider who was billed can bill the usage charge to its associated lower provider.

Further, for data sent by the personal user 221A, it is also possible to bill the usage charge to a plurality of providers (associated higher and lower providers) like the tertiary provider 221 and secondary provider 220, or the tertiary provider 221 and the primary provider 200. In this case, when the usage charge billed to a single provider for one passing data is 1 yen, the usage charge billed to two providers for one passing data can be 0.5 yen each.

Another method for billing the charge to a plurality of providers is that the charge is billed to a destination provider.

In the case of a personal user, the charge is billed to a provider to which the personal user is connected, but in the case of a corporate user, a content trader or an advertising agency which uses the provider for business, the charge may be billed to the corporate user, the content trader or the advertising agency.

Next, an Internet usage charge billing system with respect to passing data entering to the second provider 100 area will be explained. This Internet usage charge billing system is based on a condition that the data sent from the first provider 200 area (sender) to a destination in the second provider 100 area enters the second provider 100 area.

When the personal user 221A reads or inspects contents provided by the content trader 110C, data sent from the personal user 221A is sent to the content trader 110C through the tertiary provider 221, the secondary provider 220, the primary provider 200, the primary provider 100 and the secondary provider 110.

When the data is sent through the above-described path, since the data passes through the own-area, the primary provider 100 recognizes the identifying information BBA from the sent data, and bills the usage charge to the tertiary provider 221 (sender) of the personal user 221A (user).

If information supplied from the content trader 110C is accessed as in this embodiment, it is preferable to recognize the identifying information AA from the sent data and to bill the usage charge to the secondary provider 110 of the content trader 110C.

Although the usage charge was billed to the provider which was directly connected to the sender in the above embodiment, it is also possible to bill the usage charge to the secondary provider 220 to which the tertiary provider is connected, or to the primary provider 200 to which the tertiary provider 221 is connected, instead of the tertiary provider 221.

Next, an Internet usage charge billing system with respect to passing data goes out from the second provider 100 area will be explained. This Internet usage charge billing system is based on a condition that data sent from the first provider 200 area (sender) is sent to a destination of in the second provider 100 area, and data returned from the destination in the second provider 100 area to the sender of the first provider 200 area goes out from the second provider 100 area.

The data returned from the content trader 110C is sent to the personal user 221A through the secondary provider 110, the primary provider 100, the primary provider 200, the secondary provider 220 and the tertiary provider 221.

When the data is sent through the above-described path, since the data goes out from the own-area, the primary provider 100 recognizes the identifying information BBA from the sent data, and bills the usage charge to the tertiary provider 221 (sender) of the personal user 221A (user).

If information supplied from the content trader 110C is accessed as in this embodiment, it is also possible to recognize the identifying information AA from the sent data, and to bill the usage charge to the secondary provider 110 of the content trader 110C.

Although the usage charge was billed to the provider which was directly connected to the sender in the above embodiment, it is also possible to bill the usage charge to the secondary provider 220 to which the tertiary provider is connected, or to the primary provider 200 to which the tertiary provider 221 is connected, instead of the tertiary provider 221.

When the personal user 221A reads or inspects contents supplied by the content trader 100C, i.e., when the data sent from the personal user 221A is sent to the content trader 100C through the tertiary provider 221, the secondary provider 220, the primary provider 200 and the primary provider 100, since the data goes out from the own-area, the primary provider 100 recognizes the identifying information BBA from the sent data, and bills the usage charge to the tertiary provider 221 (sender) of the personal user 221A (user). In this embodiment also, it is also possible to bill the usage charge to the secondary provider 220 to which the tertiary provider is connected, or to the primary provider 200 to which the tertiary provider 221 is connected, instead of the tertiary provider 221.

Also when data returned from the content trader 100C is sent to the personal user 221A through the primary provider 100, the primary provider 200, the secondary provider 220 and the tertiary provider 221, since the data goes out from the own-area, the primary provider 100 recognizes the identifying information BBA from the sent data, and bills the usage charge to the tertiary provider 221 (sender) of the personal user 221A (user). In this embodiment also, it is also possible to bill the usage charge to the secondary provider 220 to which the tertiary provider is connected, or to the primary provider 200 to which the tertiary provider 221 is connected, instead of the tertiary provider 221.

When the personal user 110A reads or inspects contents supplied by the advertising agency 221D, i.e., when data sent from the personal user 110A is sent to the advertising agency 221D through the primary provider 110, the primary provider 200, the secondary provider 220 and the tertiary provider 221, charge for the passing data is not billed. When data sent from the personal user 221A is sent to the personal user 100A through the tertiary provider 221, the secondary provider 220, the primary provider 200 and the primary provider 100, charge for the passing data is not billed.

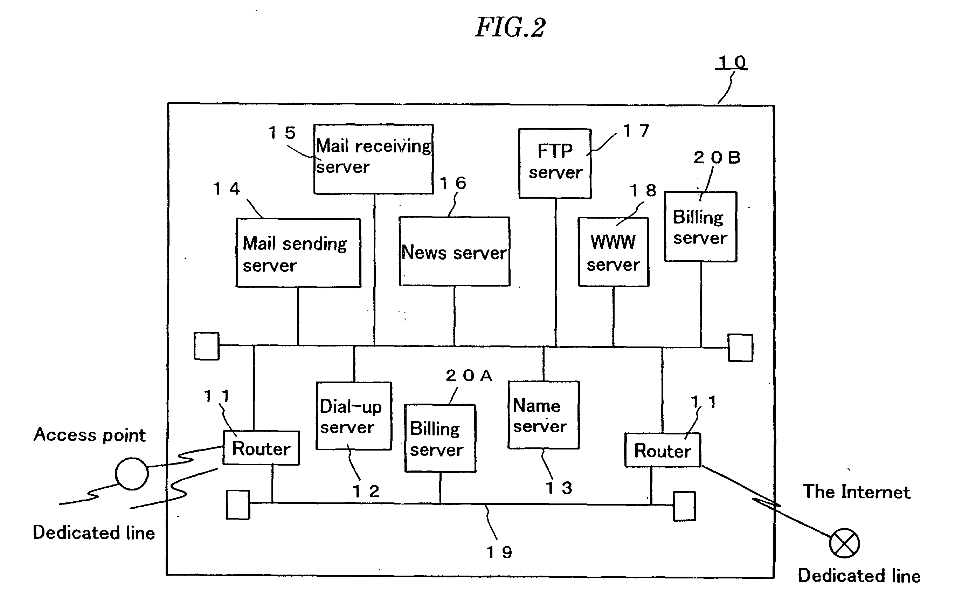

Fig.2 is a block diagram of a system of a provider for explaining the Internet usage charge billing system of the embodiment.

A service system 10 of a provider is connected to a personal user, a corporate user or a content trader through routers (frame transmission apparatuses) 11 which is a path controller by means of a telephone, an ISDN line or a dedicated line. The service system 10 is also connected to other providers by means of dedicated lines. The plurality of routers 11 are connected to each other through a billing network 19, and the billing network 19 is provided with a billing server 20A. A frame whose IP address which is not directly connected is a destination is transferred to another provider by the router 11. Passing data which does not enter the own provider 10 and merely passes through is stored and summarized in the billing server 20A together with its identifying information given in the passing data.

The service system 10 of the provider includes a dial-up server 12, a name server 13, a mail sending server 14, a mail receiving server 15, a news server 16, a FTP server 17 and a WWW server 18.

Here, the dial-up server 12 certifies a user, and user IDs and passwords of contract members are registered therein. A DNS operates in the name server 13, and the name server 13 converts domain names and IP addresses. An SMTP operates in the mail sending server 14, and users send mails through the mail sending server 14. A POP operates in the mail receiving server 15, and receiving mail boxes of users exist in the mail receiving server 15. An NNTP operates in the news server 16, and users can take part in an electronic conference called net news using the news server 16. An FTP operates in the FTP server 17, and on-line software, technical information are registered therein. An HTTP operates in the WWW server 18, and homepages of users are made available here. Passing data entering the own provider 10 is stored and summarized, together with identifying information given in the passing data, in the mail sending server 14, the mail receiving server 15, the news server 16, the FTP server 17, and the WWW server 18.

The passing data and the identifying information may be stored in the mail sending server 14, the mail receiving server 15, the news server 16, the FTP server 17, and the WWW server 18, and they may be summarized or billing may be determined for each identifying information. Alternatively, a billing server 20B may be separately provided as shown in Fig.2, and the passing data accumulated in the mail sending server 14, the mail receiving server 15, the news server 16, the FTP server 17, and the WWW server 18 may be stored and processed in the billing server 20B together with the identifying information.

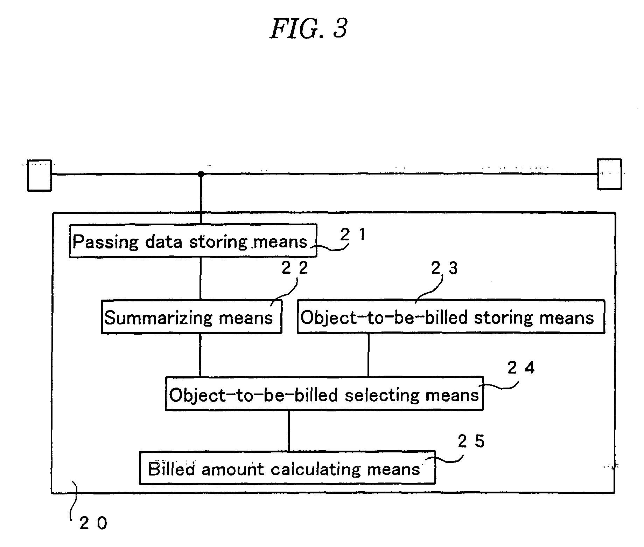

An outline structure of the billing server 20 will be explained using Fig.3. Fig.3 is a block diagram in which the billing server is expressed using function realizing means.

The billing server 20 comprises passing data storing means 21 for storing passing data together with senders or destination identifying information of , summarizing means 22 for summarizing the passing data stored in the passing data storing means 21 for each identifying information, object-to-be-billed storing means 23 for storing an object-to-be-billed list which is necessary to judge the object-to-be-billed, object-to-be-billed selecting means 24 for judging the object-to-be-billed, and billed amount calculating means 25 for calculating the billed amount of the object-to-be-billed selected by the object-to-be-billed selecting means 24.

If necessary for billing, a data amount, a packet length and the like are stored in the passing data storing means 21. The passing data stored in the passing data storing means 21 is periodically summarized for each identifying information by the summarizing means 22. Necessary information for judging the object-to-be-billed may be stored in the object-to-be-billed storing means 23, and an object-to-not-be-billed list may be used instead of the object-to-be-billed list, or a list in which the object-to-be-billed and the object-to-not-be-billed are distinguished by checking may be used. The billed amount calculating means 25 includes a unit price to be multiplied, kinds of data, kinds of passing data, or a price rate as well as a piece rate table which are previously determined for each object-to-be-billed.

The object-to-be-billed storing means 23 can be written if necessary, and a result of the billed amount calculating means 25 is appropriately output.

Next, passing data summarized by the Internet usage charge billing system will be explained.

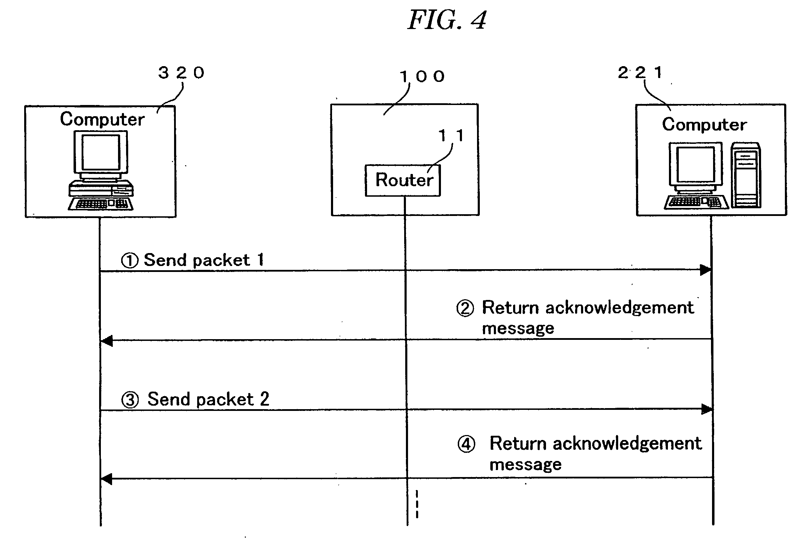

Fig.4 shows one embodiment of data transmission and receiving, and shows a case in which data is sent to a computer in the tertiary provider 221 from another computer in the secondary provider 320 through the provider 100.

Data sent from the computer in the secondary provider 320 is sent such that the data is divided in units of packet. First, if a packet 1 is sent from the computer in the secondary provider 320 and the packet 1 is received by the computer in the tertiary provider 221, an acknowledgement message is returned from the computer in the tertiary provider 221. If a packet 2 is sent from the computer in the secondary provider 320 and the packet 2 is received by the computer in the tertiary provider 221, an acknowledgement message is again returned from the computer in the tertiary provider 221.

When the data is sent and received in the above manner, passing data which passes through the primary provider 100 is summarized in the following manner.

First, all the passing data passing through the primary provider 100 is summarized. That is, packets 1 and 2 sent from the secondary provider 320 are summarized by the primary provider 100. Further, two acknowledgement messages sent from the tertiary provider 221 are summarized by the primary provider 100. Assuming that one passing data is 1 yen, when billing the charges to respective senders, 2 yen is billed to the secondary provider 320, and 2 yen is billed to the tertiary provider 221. On the other hand, it is conceived that the two acknowledgement messages are return-data to data sent from the secondary provider 320 and thus, it is possible to bill the secondary provider 320 for the two acknowledgement messages returned from the tertiary provider 221. In this case, 4 yen is billed to the secondary provider 320. In the above billing method, the charge is billed in units of passing data. The acknowledgement message may be removed from the object-to-be-billed as message data for informing a reception state. On the other hand, when passing charges are billed to respective destinations, 2 yen corresponding to the two acknowledgement messages is billed to the secondary provider 320, and 2 yen corresponding to reception of the two packets is billed to the tertiary provider 221. In this case also, the acknowledgement message may be removed from the object-to-be-billed as message data for informing a reception state.

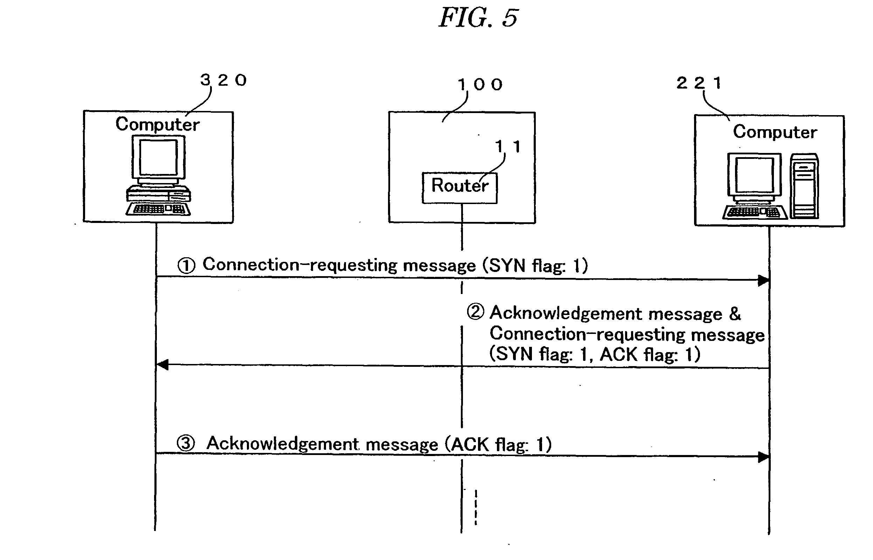

Fig.5 shows one embodiment of the data transmission and receiving, and shows a connection procedure between two computers.

First, the computer in the secondary provider 320 sends a connection-requesting message to the computer in the tertiary provider 221. In reply to this, the computer in the tertiary provider 221 sends an acknowledgement message for the connection-requesting message from the computer in the secondary provider 320, and the computer in the tertiary provider 221 also sends the connection-requesting message. Here, the two messages are sent in one packet. Lastly, the computer in the secondary provider 320 sends an acknowledgement message receiving a packet for the connection-requesting message from the computer in the tertiary provider 221. In this manner, when the acknowledgement messages to the respective connection-requesting messages reached, the connection establishing procedure is completed.

When data is sent and received in the above manner, passing data passing through the primary provider 100 is summarized in the following method.

First, all passing data passing through the primary provider 100 is summarized. That is, passing data sent from the secondary provider 320 is summarized as two passing data comprising a connection-requesting message and an acknowledgement message. Passing data sent from the tertiary provider 221 is summarized as one passing data because it includes an acknowledgement message and a connection-requesting message in one packet. Assuming that one passing data is 1 yen, when billing the charges to respective senders, 2 yen is billed to the secondary provider 320, and 1 yen is billed to the tertiary provider 221. On the other hand, it is conceived that a packet including an acknowledgement message and a connection-requesting message is return-data to data sent from the secondary provider 320 and thus, it is possible to bill the secondary provider 320 for the packet returned from the tertiary provider 221. In this case, 3 yen is billed to the secondary provider 320. The acknowledgement message may be removed from the object-to-be-billed as message data for informing a reception state. On the other hand, when passing charges are billed to respective destinations, 1 yen corresponding to the one packet is billed to the secondary provider 320, and 2 yen is billed to the tertiary provider 221. In this case also, the acknowledgement message may be removed from the object-to-be-billed as message data for informing a reception state.

When charge is billed in units of connection, the charge is summarized in units of connection establishing procedure. More specifically, it is also possible to summarize only connection-requesting messages as passing data. In this case, although it is also possible to bill the charge only to the secondary provider 320, but the charge may be billed to both of them. When charge is billed to a destination and the first connection-requesting message is summarized, the charge is billed to the tertiary provider 221.

Although the connection establishing procedure has been explained in the above embodiment, connection closing procedure is the same as the connection establishing procedure. That is, a disconnection-requesting message is handled as passing data instead of connection-requesting message. It is also possible to summarize the disconnection-requesting message as passing data together with the connection-requesting message.

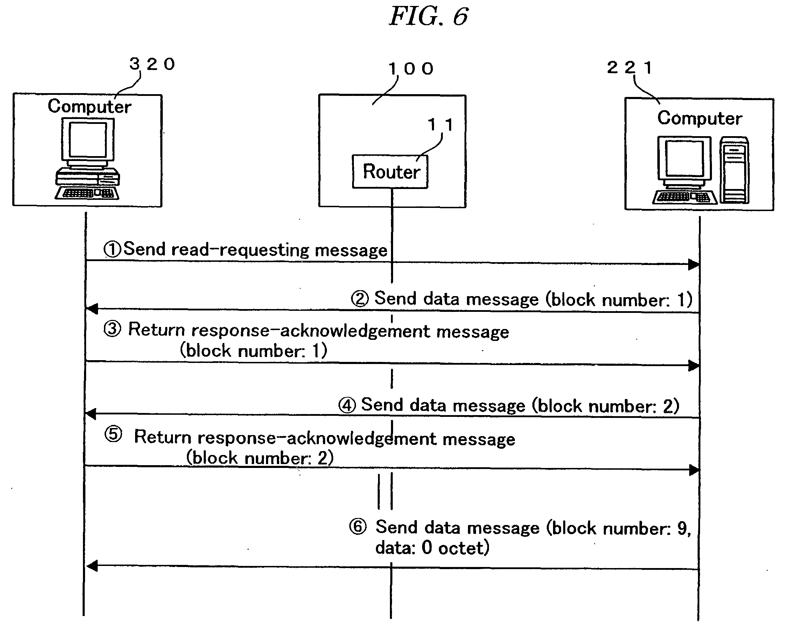

Fig.6 shows one embodiment of data transmission and receiving, and shows a case in which an image file possessed by the computer in the tertiary provider 221 is downloaded from the computer in the secondary provider 320 through the primary provider 100.

First, the computer in the secondary provider 320 sends a read-requesting message to the computer in the tertiary provider 221. In reply to this, if the computer in the tertiary provider 221 receives the read-requesting message, the computer divides contents of the image file and sends the same as data message. If the computer sends one data message, the computer waits for a response-acknowledgement message, and if the response-acknowledgement message is received, the computer sends a next data message. If all data has been sent, the computer informs that the reading operation of data is completed.

When data is sent and received in the above manner, passing data passing through the primary provider 100 is summarized in the following manner.

First, all passing data passing through the primary provider 100 is summarized. That is, passing data sent from the secondary provider 320 is summarized as three passing data comprising a read-requesting message and two response-acknowledgement messages. Passing data sent from the tertiary provider 221 is summarized as three passing data because it includes three data messages. Assuming that one passing data is 1 yen, when billing the passing charges to respective senders, 3 yen is billed to the secondary provider 320, and 3 yen is billed to the tertiary provider 221. On the other hand, it is conceived that the three data messages are return-data to data sent from the secondary provider 320 and thus, it is possible to bill the secondary provider 320 for the packet returned from the tertiary provider 221. In this case, 6 yen is billed to the secondary provider 320. On the contrary, it is also possible to bill the tertiary provider 221 which provides the download data. In this case, 6 yen is billed to the tertiary provider 221. It is also possible to bill the secondary provider 320 only for the sent message or received message. On the contrary, it is also possible to bill the tertiary provider 221 which provides the download data only for the sent message or received message. Further, it is also possible to bill only for the download data, i.e., for one time passing charge for one time download. This can be realized by summarizing only the read-requesting message as passing data.

Although the image file was downloaded in the above embodiment, the same procedure is carried out also when the image file is uploaded. That is, a write-requesting message instead of the read-requesting message is handled as the passing data.

Although the data length or packet length is not taken into consideration in the above embodiment, it is also possible to bill while taking the data length or packet length of each passing data into consideration.

In the above embodiment, one provider area includes the secondary provider 110 and tertiary provider 111 connected to the primary provider 100, as well as the personal users 100A, 110A and the content traders 100C, 110C respectively connected to the primary provider 100, the secondary provider 110 and the tertiary provider 111. Alternatively, one provider area may be provided in each provider. One provider area in each provider means for example that the primary provider 100 includes an area in which the personal user 100A and the content trader 100C which are directly connected to the primary provider 100, and the secondary provider 110 includes a provider area which is different from the primary provider 100. In this case, the secondary provider 110 area includes the personal user 110A and the content trader 110C directly connected to the secondary provider 110.

The above embodiment is based on passing data passing through the provider area, but the invention can also be applied to a billing system for data accessed to a particular provider, hardware, a site or a homepage. In this case, identifying information of a sender given to accessed data or data supplied to the sender by access is store, information concerning data is summarized for each identifying information of senders, and a billed amount is determined for each sender identifying information in accordance with the information amount concerning data summarized for each identifying information of sender. It is also possible to judge whether the data is object-to-be-billed data based on kinds of data, to summarize the same based on the sender identifying information given to data, and to determine the billed amount for each sender identifying information in accordance with the information amount concerning data summarized for each sender identifying information.

### INDUSTRIAL APPLICABILITY

As apparent from the explanation of the embodiment, according to the Internet usage charge billing system of the present invention, it is possible to bill a load of data passing generated between primary providers based on actual usage

## Claims

1. An Internet usage charge billing system for passing data passing through a second provider area when data sent from a first provider area which is a sender is sent to a destination of a third provider area which is different from said second provider area through said second provider area which is different from said first provider area, said system comprising a step for storing sender identifying information given to said passing data, a step for summarizing information concerning said passing data for each said sender identifying information, and a step for determining a billed amount for each said sender identifying information in accordance with a passing information amount concerning said passing data summarized for each said sender identifying information.

2. An Internet usage charge billing system for passing data passing through a second provider area when data sent from a first provider area which is a sender is sent to a destination of a third provider area which is different from said second provider area through said second provider area which is different from said first provider area, said system comprising a step for storing destination identifying information given to said passing data, a step for summarizing information concerning said passing data for each said destination identifying information, and a step for determining a billed amount for each said destination identifying information in accordance with a passing information amount concerning said passing data summarized for each said destination identifying information.

3. An Internet usage charge billing system for passing data in which data sent from a first provider area which is a sender is sent to a destination of a third provider area which is different from said first provider area, and data returned from the destination of said third provider area to the sender of said first provider area passes through a second provider area which is different from said first provider area, said system comprising a step for storing sender identifying information given to said passing data, a step for summarizing information concerning said passing data for each said sender identifying information, and a step for determining a billed amount for each said sender identifying information in accordance with a passing information amount concerning said passing data summarized for each said sender identifying information.

4. An Internet usage charge billing system for passing data in which data sent from a first provider area which is a sender is sent to a destination of a third provider area which is different from said first provider area, and data returned from the destination of said third provider area to the sender of said first provider area passes through a second provider area which is different from said first provider area, said system comprising a step for storing destination identifying information given to said passing data, a step for summarizing information concerning said passing data for each said destination identifying information, and a step for determining a billed amount for each said destination identifying information in accordance with a passing information amount concerning said passing data summarized for each said destination identifying information.

5. An Internet usage charge billing system for passing data entering a second provider area when data sent from a first provider area which is a sender is sent to a destination of said second provider area which is different from said first provider area, said system comprising a step for storing sender identifying information given to said passing data, a step for summarizing information concerning said passing data for each said sender identifying information, and a step for determining a billed amount for each said sender identifying information in accordance with a passing information amount concerning said passing data summarized for each said sender identifying information.

6. An Internet usage charge billing system for passing data entering a second provider area when data sent from a first provider area which is a sender is sent to a destination of said second provider area which is different from said first provider area, said system comprising a step for storing destination identifying information given to said passing data, a step for summarizing information concerning said passing data for each said destination identifying information, and a step for determining a billed amount for each said destination identifying information in accordance with a passing information amount concerning said passing data summarized for each said destination identifying information.

7. An Internet usage charge billing system for passing data in which data sent from a first provider area which is a sender is sent to a destination of a second provider area which is different from said first provider area, and data returned to the sender of said first provider area from the destination of said second provider area corresponds to passing data which goes out from said second provider area, said system comprising a step for storing sender identifying information given to said passing data, a step for summarizing information concerning said passing data for each said sender identifying information, and a step for determining a billed amount for each said sender identifying information in accordance with a passing information amount concerning said passing data summarized for each said sender identifying information.

8. An Internet usage charge billing system for passing data in which data sent from a first provider area which is a sender is sent to a destination of a second provider area which is different from said first provider area, and data returned to the sender of said first provider area from the destination of said second provider area corresponds to passing data which goes out from said second provider area, said system comprising a step for storing destination identifying information given to said passing data, a step for summarizing information concerning said passing data for each said destination identifying information, and a step for determining a billed amount for each said destination identifying information in accordance with a passing information amount concerning said passing data summarized for each said destination identifying information.

9. An Internet usage charge billing system comprising a step for storing sender identifying information given to accessed data or data which is to be supplied to a sender by accessing, a step for summarizing information concerning said data for each said sender identifying information, and a step for determining a billed amount for each said sender identifying information in accordance with an information amount concerning said data summarized for each said sender identifying information.

10. An Internet usage charge billing system wherein information concerning accessed data or data which is to be supplied to a sender by accessing is summarized based on sender identifying information given to said data, it is judged whether said data is object-to-be-billed data based on kinds of said data, said summarized data concerning the object-to-be-billed data is output.

11. An Internet usage charge billing system according to any one of claims 1 to 10, wherein said identifying information is identifying information concerning a provider, hardware or a path controller.

12. An Internet usage charge billing system according to any one of claims 1 to 10, wherein said identifying information is an IP address, a MAC address or a domain name.

13. An Internet usage charge billing system according to any one of claims 1 to 10, further comprising a step for judging an object-to-be-billed based on said identifying information.

14. An Internet usage charge billing system according to any one of claims 1 to 10, wherein the data is summarized in units of packet.

15. An Internet usage charge billing system according to any one of claims 1 to 10, wherein the data is summarized in units of connection.

16. An Internet usage charge billing system according to any one of claims 1 to 10, wherein the data is summarized in units of passing data.

17. An Internet usage charge billing system according to any one of claims 1 to 10, wherein the data is summarized in accordance with a data length or packet length.

18. An Internet usage charge billing system according to any one of claims 1, 2, 5 and 6, wherein said passing data is read-requesting message data or write-requesting message data.

19. An Internet usage charge billing system according to any one of claims 3, 4, 7 and 8, wherein said passing data is massage data for informing a reception state, or response confirmation data for reading request or writing request.

20. An Internet usage charge billing system according to any one of claims 1, 2, 5 and 6, wherein said passing data is connection-requesting message data or disconnection-requesting message data.

21. An Internet usage charge billing system according to any one of claims 1, 2 , 5 and 6, wherein said passing data is upload data.

22. An Internet usage charge billing system according to any one of claims 3, 4, 7 and 8, wherein said passing data is download data.

23. An Internet usage charge billing system for passing data passing through a second provider area when data sent from a first provider area which is a sender is sent to a destination of a third provider area which is different from said second provider area through said second provider area which is different from said first provider area, wherein information concerning said passing data is summarized based on sender identifying information given to said passing data, it is judged whether an object is object-to-be-billed based on the sender identifying information, and said passing data summarized concerning the object-to-be-billed is output.

24. An Internet usage charge billing system for passing data passing through a second provider area when data sent from a first provider area which is a sender is sent to a destination of a third provider area which is different from said second provider area through said second provider area which is different from said first provider area, wherein information concerning said passing data is summarized based on destination identifying information given to said passing data, it is judged whether an object is object-to-be-billed based on the destination identifying information, and said passing data summarized concerning the object-to-be-billed is output.

25. An Internet usage charge billing system for passing data in which data sent from a first provider area which is a sender is sent to a destination of a third provider area which is different from said first provider area, and data returned from the destination of said third provider area to the sender of said first provider area passes through a second provider area which is different from said first provider area, wherein information concerning said passing data is summarized based on sender identifying information given to said passing data, it is judged whether an object is object-to-be-billed based on the sender identifying information, and said passing data summarized concerning the object-to-be-billed is output.

26. An Internet usage charge billing system for passing data in which data sent from a first provider area which is a sender is sent to a destination of a third provider area which is different from said first provider area, and data returned from the destination of said third provider area to the sender of said first provider area passes through a second provider area which is different from said first provider area, wherein information concerning said passing data is summarized based on destination identifying information given to said passing data, it is judged whether an object is object-to-be-billed based on the destination identifying information, and said passing data summarized concerning the object-to-be-billed is output.

27. An Internet usage charge billing system for passing data entering a second provider areawhen data sent from a first provider area which is a sender is sent to a destination of said second provider area which is different from said first provider area, wherein information concerning said passing data is summarized based on sender identifying information given to said passing data, it is judged whether an object is object-to-be-billed based on the sender identifying information, and said passing data summarized concerning the object-to-be-billed is output.

28. An Internet usage charge billing system for passing data entering a second provider area when data sent from a first provider area which is a sender is sent to a destination of said second provider area which is different from said first provider area, wherein information concerning said passing data is summarized based on destination identifying information given to said passing data, it is judged whether an object is object-to-be-billed based on the destination identifying information, and said passing data summarized concerning the object-to-be-billed is output.

29. An Internet usage charge billing system for passing data in which data sent from a first provider area which is a sender is sent to a destination of a second provider area which is different from said first provider area, and data returned to the sender of said first provider area from the destination of said second provider area corresponds to passing data which goes out from said second provider area, wherein information concerning said passing data is summarized based on sender identifying information given to said passing data, it is judged whether an object is object-to-be-billed based on the sender identifying information, and said passing data summarized concerning the object-to-be-billed is output.

30. An Internet usage charge billing system for passing data in which data sent from a first provider area which is a sender is sent to a destination of a second provider area which is different from said first provider area, and data returned to the sender of said first provider area from the destination of said second provider area corresponds to passing data which goes out from said second provider area, wherein information concerning said passing data is summarized based on destination identifying information given to said passing data, it is judged whether an object is object-to-be-billed based on the destination identifying information, and said passing data summarized concerning the object-to-be-billed is output.
